# EUROPÄISCHE PATENTANMELDUNG

(11) **EP 1 614 702 A1**
(43) Veröffentlichungstag der Anmeldung: **11.01.2006**
(21) Anmeldenummer: 05013449.3
(22) Anmeldetag: 22.06.2005
(51) Int. Cl.: C08G 18/76, C08G 18/44, C08G 18/10, C08G 64/40

(54) **Herstellung klarer Isocyanatprepolymere auf Hexandiolethercarbonat-Basis**

(30) Priorität: 05.07.2004 DE 102004032419
(71) Anmelder: Bayer MaterialScience AG, 51368 Leverkusen (DE)
(72) Erfinder: Nefzger, Hartmut, Dr., 50259 Pulheim (DE); Schmidt, Manfred, Dr., 41540 Dormagen (DE); Barnes, James-Michael, 53547 Breitscheid-Hochscheid (DE); Felske, Ernst, 41464 Neuss (DE)

(57) **Zusammenfassung**

Die vorliegende Erfindung betrifft ein Herstellverfahren für klare Isocyanatprepolymere auf Hexandiolethercarbonat-Basis sowie deren Verwendung zur Herstellung von Polyurethanen.

## Beschreibung

Die vorliegende Erfindung betrifft ein verbessertes Verfahren zur Herstellung von trübungsfreien auf Polycarbonat-Polyolen basierenden Isocyanatprepolymeren.

Polycarbonatpolyole auf Basis von Hexandiolether werden entsprechend dem Stand der Technik mit molar überschüssigem Polyisocyanat, meist 4,4'-Diphenylmethandiisocyanat, zu Isocyanatprepolymeren mit endständigen NCO-Gruppen ("NCO-Prepolymere") umgesetzt, welche ihrerseits wichtige Rohstoffe zur Herstellung von Polyurethan-Gießelastomeren sind.

Nachteilig an diesen auf 4,4'-Diphenylmethandiisocyanat und Hexandiolethercarbonatpolyolen basierenden NCO-Prepolymeren ist, dass diese beim Lagern bei Raumtemperatur meist schnell eintrüben und sogar einen semikristallinen Bodensatz ausbilden können. Eine Erhöhung der Lagertemperatur führt zu einem starken Anstieg der Viskosität, wodurch die NCO-Prepolymere letztendlich unbrauchbar werden. Gleiches gilt auch, wenn man einmal abgekühlte und somit Trübung oder Bodensatz aufweisende NCO-Prepolymere wieder erwärmt. Der Niederschlag führt bei der weiteren Umsetzung zu Inhomogenitäten im fertigen Gießelastomer, die wiederum Anlass für Materialversagen sein können.

Es bestand die Aufgabe, diese NCO-Prepolymeren so herzustellen, dass die Trübung aufgrund von technischen Verbesserungen nicht mehr auftreten kann. Es wurde nun gefunden, dass sich klare NCO-Prepolymere herstellen lassen, die auch nach längerer Lagerung bei Raumtemperatur keine Eintrübung aufweisen, wenn das zur Herstellung eingesetzte Polycarbonatpolyol vor der Umsetzung mit Polyisocyanat einer Kurzwegdestillation unterworfen wird, bei der leichtflüchtige Anteile, die bei einem Druck von 0,1 mbar Siedepunkte von kleiner 200°C aufweisen, abgetrennt werden.

Gegenstand der Erfindung ist ein Verfahren zur Herstellung von bei Raumtemperatur lagerstabil klaren NCO-terminierten Prepolymeren, bei dem Polycarbonatpolyole mit einem stöchiometrischen Überschuss an 4,4'-Diphenylmethandiisocyanat umgesetzt werden, wobei die Polycarbonatpolyole vor der Umsetzung einer Kurzweg- oder Dünnschichtdestillation unterworfen werden, so dass sich deren Hydroxylzahl um mindestens 1,5 Hydroxylzahleinheiten, bevorzugt mindestens 3 Hydroxylzahleinheiten, verringert. "Lagerstabil klar" bedeutet in diesem Zusammenhang, dass die Prepolymere auch nach dreiwöchiger Lagerung bei 23°C keine Trübung aufweisen und der NCO-Gehalt der Prepolymere sich nicht signifikant ändert.

Die destillative Verringerung der Hydroxylzahl der Polycarbonatpolyole wird in dem Fachmann bekannten Apparaturen, wie Fallfilmverdampfer, Dünnschichtverdampfer oder Kurzwegverdampfer, durchgeführt und erfolgt bevorzugt kontinuierlich. Die Destillation wird bevorzugt bei Temperaturen von 160 bis 250°C, vorzugsweise von 180 bis 210°C und Drücken von 0,05 bis 10 mbar, vorzugsweise 0,1 bis 3 mbar durchgeführt. Das Destillat wird an einen Kühlfinger, dessen Temperatur im Bereich von 40 bis 100°C gewählt wird, in flüssiger Form abgeschieden. Das abgetrennte Destillat kann wieder zur Herstellung von Polycarbonatpolyolen eingesetzt werden. Die mittlere Verweilzeit des Polycarbonatpolyols in der Destillationsapparatur beträgt bevorzugt 2 bis 600 s.

Zweckmäßigerweise wird das Polycarbonatpolyol vor dem kontinuierlichen Eintragen in das Verdampfungsgerät z.B. mit Hilfe von Wärmetauschern aufgeheizt. In einer bevorzugten Ausführungsform wird die destillative Behandlung des Polycarbonatpolyols der Herstellung unmittelbar nachgeschaltet, da in der Endstufe der Fertigung das Polycarbonatpolyol ohnehin üblicherweise eine Temperatur von ca. 200°C aufweist und somit weiterer Energieaufwand entfällt. Unmittelbar nach dem Verlassen der Destillationsapparatur wird das Polycarbonatpolyol auf Temperaturen unterhalb 120°C abgekühlt. Der Kondensator für das Destillat wird in der Regel je nach Zusammensetzung desselben auf 50 bis 75°C aufgeheizt. Die Destillationsapparatur wird darüber hinaus bei vermindertem Druck betrieben, um die Effektivität des Vorgangs zu steigern. Üblich sind hierbei Drücke unterhalb von 100 mbar, bevorzugt unterhalb von 20 mbar. Weiterhin kann die Effektivität gesteigert werden, indem man dem Polycarbonatpolyol eine kleine Menge eines inerten Lösungsmittels mit einem Siedepunkt im Bereich von 100 bis 300°C als sog. Schleppmittel zusetzt. Als Schleppmittel können die dem Fachmann bekannten Substanzen wie z.B. Sulfolan, Toluol oder Xylol verwendet werden.

Durch die Destillation des Polycarbonatpolyols vermindert sich dessen Hydroxylzahl je nach Effektivität dieses Prozesses um etwa 1,5 bis 15 Hydroxylzahleinheiten, bevorzugt 3 bis 8 Hydroxylzahleinheiten.

Das destillativ vorbehandelte Polycarbonatpolyol wird anschließend in der dem Fachmann an sich bekannten Weise mit 4,4'-Diphenylmethandiisocyanat (z.B. Desmodur® 44 M, Bayer AG) bei erhöhter Temperatur (in der Regel im Bereich von 50 bis 100°C) zu einem NCO-endständigen Prepolymer umgesetzt. Die eingesetzten Polycarbonatpolyole weisen im Allgemeinen eine Hydroxylzahl von 27 bis 113 mg KOH/g auf, der NCO-Gehalt der erhaltenen Prepolymere beträgt in der Regel 5 bis 15 Gew.% NCO.

### Beispiele

### Beispiel 1

9000 g handelsübliches Polycarbonatpolyol auf Basis von Hexandiolether mit einer Hydroxylzahl von 53 mg KOH/g (Baytec® VP.PU 0385, Bayer AG) wurden mit 101 g 1,6-Hexandiol vermischt und für 14 Std. bei 200°C getempert. Man bestimmte die OH-Zahl zu 63,7 mg KOH/g und die Viskosität zu 840 mPas (75°C).

### Beispiel 2

3900 g Hexandiolether mit einer Hydroxylzahl von 535 mg KOH/g, 725 g Hexandiol und 4635 g Diphenylcarbonat wurden zusammen mit 150 mg Dibutylzinnoxid bei Normaldruck auf 180°C für 1 Stunde erhitzt. Man kühlte auf 110°C ab und verminderte den Druck auf 15 mbar, wobei die Destillation von Phenol begann. Man erhöhte die Temperatur im Verlauf von 10 Std. auf 200°C. Zur Vervollständigung der Reaktion verminderte man für 1 Std. den Druck auf 0,5 mbar. Man bestimmte die OH-Zahl zu 62,5 mg KOH/g und die Viskosität zu 910 mPas (75°C).

### Beispiel 3

8900 g des Polycarbonatpolyols aus Beispiel 1 wurden auf 160°C vorgewärmt und im Verlauf von 6 Std. bei einem Druck von < 1 mbar einer Kurzwegverdampfung unterworfen, wobei der Vorverdampfer bei 200°C betrieben wurde, die Manteltemperatur ebenfalls 200°C betrug, das Destillat an einem Kühlfinger mit einer Temperatur von 50°C kondensiert wurde und das vom Destillat befreite Polycarbonatpolyol in einem auf 10°C temperierten Auffanggefäß gesammelt wurde.

Man erhielt 8676 g Polycarbonatpolyol mit einer OH-Zahl von 56,6 mg KOH/g und einer Viskosität von 890 mPas (75°C), sowie 108 g Destillat mit einer OH-Zahl von 495 mg KOH/g.

### Beispiel 4

4820 g des Polycarbonatpolyols aus Beispiel 2 wurden auf 160°C vorgewärmt und im Verlauf von 3 Std. bei einem Druck von < 1 mbar einer Kurzwegverdampfung unterworfen, wobei der Vorverdampfer bei 200°C betrieben wurde, die Manteltemperatur ebenfalls 200°C betrug, das Destillat an einem Kühlfinger mit einer Temperatur von 50°C kondensiert wurde und das vom Destillat befreite Polycarbonatpolyol in einem auf 10°C temperierten Auffanggefäß gesammelt wurde.

Man erhielt 4696 g Polycarbonatpolyol mit einer OH-Zahl von 55,2 mg KOH/g und einer Viskosität von 1000 mPas (75°C), sowie 74 g Destillat mit einer OH-Zahl von 465 mg KOH/g.

### Beispiel 5

1698 g 4,4'-Diphenylmethandiisocyanat (Desmodur® 44M, Bayer AG) wurden bei 50°C unter Stickstoff vorgelegt, mit 2802 g des Polycarbonatpolyols aus Beispiel 3 versetzt und für 2 Std. bei 80°C gerührt. Man bestimmte den NCO-Gehalt zu 9,96 Gew.-% NCO, die Viskosität bei 70°C betrug 1620 mPas. Das Produkt war direkt nach Herstellung vollständig klar. Nach 21 Tagen Lagerung bei Raumtemperatur wurde ebenfalls keinerlei Eintrübung beobachtet.

### Beispiel 6

1690 g 4,4'-Diphenylmethandiisocyanat (Desmodur® 44M, Bayer AG) wurden bei 50°C unter Stickstoff vorgelegt, mit 2810 g des Polycarbonatpolyols aus Beispiel 4 versetzt und für 2 Std. bei 80°C gerührt. Man bestimmte den NCO-Gehalt zu 10,01 Gew.% NCO, die Viskosität bei 70°C betrug 1625 mPas. Das Produkt war direkt nach Herstellung vollständig klar. Nach 21 Tagen Lagerung bei Raumtemperatur wurde ebenfalls keinerlei Eintrübung beobachtet.

### Vergleichsbeispiel

834 kg 4,4'-Diphenylmethandiisocyanat (Desmodur® 44M, Bayer AG) wurden bei 50°C unter Stickstoff vorgelegt, mit 1366 kg eines handelsüblichen Polycarbonatpolyols auf Basis von Hexandiol mit einer OH-Zahl von 58 mgKOH/g (Baytec VP.PU 0385, Bayer AG) versetzt und für 2 Std. bei 80°C gerührt. Man bestimmte den NCO-Gehalt zu 9,97 Gew.-% NCO, die Viskosität bei 70°C betrug 1880 mPas. Das Produkt zeigte bereits direkt nach Herstellung eine leichte Trübung. Nach 2 Tagen Lagerung bei Raumtemperatur beobachtete man eine weiter zunehmende Eintrübung, die nach 4 Monaten Lagerung immer stärker sedimentierte.

## Patentansprüche

1. Verfahren zur Herstellung von bei Raumtemperatur lagerstabil klaren NCO-terminierten Prepolymeren, bei dem Polycarbonatpolyole mit einem stöchiometrischen Überschuss an 4,4'-Diphenylmethandiisocyanat umgesetzt werden, wobei die Polycarbonatpolyole vor der Umsetzung einer Kurzweg- oder Dünnschichtdestillation unterworfen werden, so dass sich deren Hydroxylzahl um mindestens 1,5 Hydroxylzahleinheiten verringert.

2. Verwendung der gemäß Anspruch 1 erhältlichen NCO-Prepolymeren zur Herstellung von Polyurethanen.
